## Europäisches Patentamt

## European Patent Office

## Office européen des brevets

(19)

(11) Numéro de publication: **0 222 627**
**B1**

(12) # FASCICULE DE BREVET EUROPÉEN

(45) Date de publication du fascicule du brevet:
15.11.89

(51) Int. Cl.⁴: **G 01 F 23/28**

(21) Numéro de dépôt: **86401943.5**

(22) Date de dépôt: **04.09.86**

---

(54) **Dispositif pour la détection de l'imminence de l'épuisement en gaz d'un réservoir de gaz liquéfié et briquet à gaz équipé de ce dispositif.**

---

(30) Priorité: **11.09.85 FR 8513496**

(43) Date de publication de la demande:
**20.05.87 Bulletin 87/21**

(45) Mention de la délivrance du brevet:
**15.11.89 Bulletin 89/46**

(84) Etats contractants désignés:
**AT BE CH DE GB IT LI LU NL SE**

(56) Documents cité:
**FR-A-2 524 980**
**US-A-3 152 723**

**PATENTS ABSTRACTS OF JAPAN, vol. 7, no. 101 (P-194) 1246 28 avril 1983; & JP-A-58 26 226 (FUJI DENKI SOUGOU KENKYUSHO K.K. 16-02-1983**

(73) Titulaire: **S.T. DUPONT Société anonyme dite:,
Tour Maine- Montparnasse 33, avenue du Maine,
F-75755 Paris Cédex 15 (FR)**

(72) Inventeur: **Grossiord, Claude, 88, Avenue de la
Plaine, F-74000 Annecy (FR)**

(74) Mandataire: **Jolly, Jean- Pierre, Cabinet BROT et
JOLLY 83, rue d'Amsterdam, F-75008 Paris (FR)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

La présente invention concerne un dispositif apte à détecter l'imminence l'épuisement en gaz d'un réservoir de gaz liquéfié. Elle concerne également un briquet à gaz rechargeable équipé de ce dispositif.

Dans sa demande (le brevet français n° 2 524 980, la Demanderesse a décrit un dispositif de détection d'un niveau de liquide dans un réservoir, ce dispositif comportant un élément (transparent dont une extrémité disposée dans ledit réservoir sensiblement au niveau à détecter a un indice de réfraction tel que les rayons lumineux qui s'y propagent se réfractent à l'interface, lorsque cette extrémité baigne dans le liquide, et se réfléchissent par réflexion totale, dans le cas contraire. Dans ce dispositif, l'élément transparent est constitué d'un faisceau de fibres optiques, et l'extrémité disposée sensiblement au niveau à détecter est constituée d'un corps transparent, dont une face plane est appliquée contre une première extrémité dudit faisceau de fibres et dont les autres faces sont telles que les rayons incidents transmis par le faisceau puissent y subir au moins une réflexion totale et être transmis en sens inverse par ce faisceau jusqu'à sa seconde extrémité lorsque le corps transparent n'est pas immergé. La seconde extrémité du faisceau de fibres est fixée sur l'une des parois du réservoir, de façon visible de l'extérieur, ou à l'intérieur de celui-ci.

Un tel dispositifs peut notamment être utilisé avec avantage dans un briquet à gaz, pour savoir si le niveau du gaz liquéfié, dans le réservoir, est descendu au-dessous d'un certain seuil. Il ne permet cependant pas de déterminer avec une précision suffisante à partir de quel moment il ne subsiste, dans le réservoir, qu'une quantité de gaz correspondant à quelques allumages du briquet, une dizaine par exemple, de manière à informer l'utilisateur de l'imminence de l'épuisement du gaz, afin qu'il puisse recharger son briquet.

La présente invention vise à remédier à cet inconvénient en perfectionnant le dispositif breveté antérieurement de façon telle qu'il permette de détecter l'imminence de l'épuisement en gaz du réservoir.

L'invention s'appuie sur le fait connu que, lorsqu'un récipient contient un gaz liquéfié, les parois du récipient se recouvrent, par un phénomène de condensation, d'une mince pellicule de gaz en phase liquide, de sorte que, dans les parties formant un angle rentrant, un ménisque de liquide tend à se former.

Si, à l'intérieur du réservoir, la face externe du corps transparent du dispositif de la technique antérieure comporte un angle rentrant, le trajet des rayons lumineux incidents, se déplaçant parallèlement au faisceau de fibres, sera modifié par la présence de la couche de liquide dans cet angle. En effet, au lieu de subir une réflexion totale sur cette face, comme ce serait le cas en l'absence de gaz liquéfié à l'extérieur, les rayons lumineux correspondants traverseront cette face, pénètreront dans le ménisque de gaz liquide, s'y réfracteront pour en ressortir et se perdre à l'intérieur du réservoir.

Sur la face d'observation du faisceau de fibres optiques (extrémité de ce faisceau disposée à l'extérieur du réservoir), la zone correspondant à ces rayons et par conséquent au ménisque de gaz liquéfié sera donc sombre. Elle le restera tant qu'il subsistera du gaz liquide dans le réservoir et elle ne s'éclaircira que lorsque la phase liquide disparaîtra, ce qui constituera pour l'utilisateur un signal d'imminence de fin du gaz et lui indiquera qu'il est temps de recharger le réservoir de son briquet.

Conformément à l'invention, la face d'observation située à l'extrémité externe du réservoir du faisceau de fibres optiques comportera donc au moins une zone qui ne s'éclaircira que lorsque le réservoir sera vide de gaz en phase liquide.

L'invention a par conséquent pour objet un dispositif de détection de l'imminence de l'épuisement en gaz d'un réservoir de gaz liquéfié, comprenant un faisceau de fibres optiques dont une extrémité, constituant une face d'observation, est visible de l'extérieur du réservoir, et dont l'autre extrémité, disposée à l'intérieur du réservoir, est en contact optique avec une face plane d'un élément transparent, comportant, sur sa face opposée, au moins un premier élément dioptrique dont les parois latérales forment un angle, de préférence obtus, avec ladite face et caractérisé en ce que les dimensions de cet élément dioptrique sont telles qu'il soit apte, tant qu'il subsiste du gaz liquide dans le réservoir, à être recouvert, sensiblement dans sa totalité, par un ménisque formé d'un condensat de gaz liquide, lequel évite ainsi toute réflexion totale, sur ladite face, des rayons acheminés par le faisceau de fibres.

Le corps transparent pourra naturellement avoir toute forme désirée en fonction de la forme du signal optique désiré, dont l'apparition indiquera à l'observateur l'imminence de l'épuisement en gaz du réservoir.

Les dessins annexés illustrent l'invention dans son principe et dans certaines réalisations. Sur ces dessins:

La figure 1 illustre la formation d'un ménisque de gaz liquéfié dans un angle d'un corps transparent;

La figure 2 illustre le phénomène de double réfraction des rayons lumineux résultant de la présence de ce ménisque;

La figure 3 illustre, en perspective, une forme de mise en oeuvre de l'invention;

La figure 4 est une coupe de détail à plus grande échelle de cette forme de réalisation;

Les figures 5, 6 et 7 illustrent différentes positions de ce dispositif par rapport au fond d'un réservoir contenant un gaz liquéfié, et les figures 5', 6' et 7' représentent les signaux correspondants, apparaissant sur la face d'observation du faisceau de fibres optiques;

Les figures 8 et 9 sont des vues schématiques en perspective, illustrant différentes formes de mise en oeuvre de l'invention.

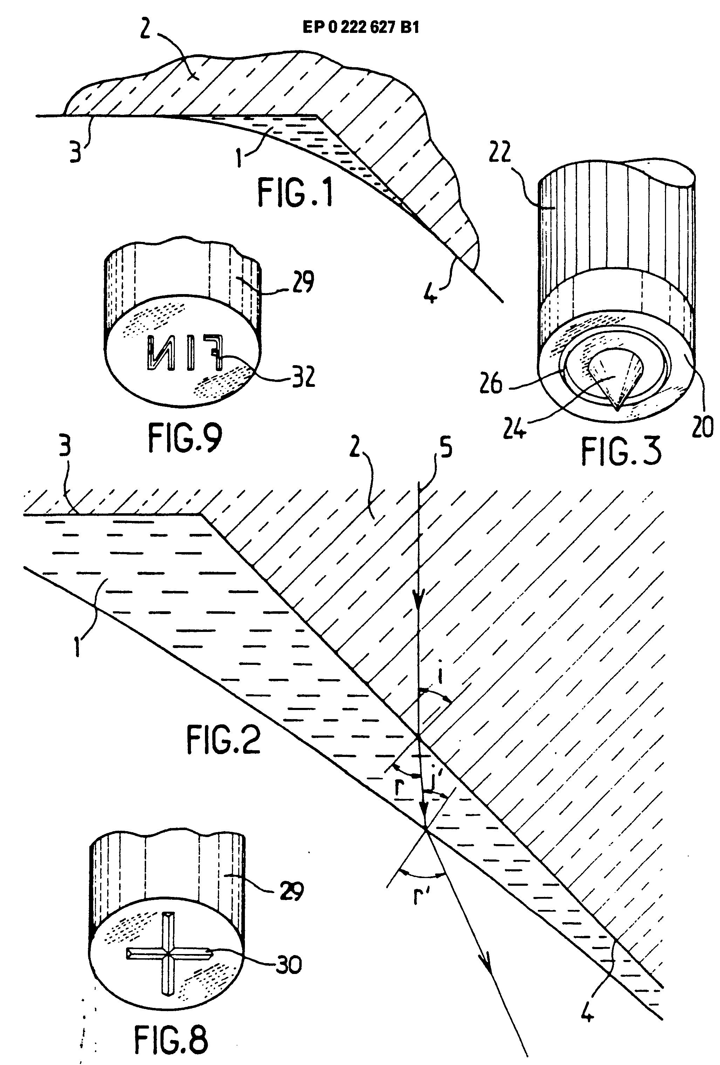

La figure 1 montre le ménisque 1 de gaz liquide qui se forme sur un corps transparent 2 possédant doux surfaces de raccordement 3 et 4 formant un angle α (ici un angle obtus d'environ 135°), lorsque ce corps transparent est disposé dans une enceinte contenant du gaz sous phase liquide.

Comme on le voit sur la figure 2, qui est une vue à plus grande échelle de la portion de raccordement des surfaces 3 et 4, la présence du ménisque 1 modifie le trajet des rayons lumineux 5 qui se propagent dans le corps transparent. En effet, au lieu de se réfléchir sur la face 4 de ce corps, par réflexion totale, sur le dioptre "matériau transparent-phase gazeuse", les rayons 5 arrivant sous un angle d'incidence i sur la face 4 pénètrent dans le ménisque de gaz liquéfié 1 en étant déviés suivant un angle de réfraction r. Ils rencontrent ensuite, sous un angle d'incidence i', le dioptre "phase liquide-phase gazeuse", sur lequel ils se réfractent suivant un angle r', pour se perdre ensuite dans l'intérieur du réservoir.

En effet, l'indice d'un matériau solide transparent par rapport à l'air se situe généralement dans un domaine de 1,4 à 1,6 et le méthacrylate de méthyle commercialisé sous l'appelation PLEXIGLAS, par exemple, possède un indice par rapport à l'air ou à la phase gazeuse, de 1,49, alors que l'indice de réfraction du butane est 1,35 et celui du propane 1,29. L'angle de réflexion totale λ correspondant à divers dioptres sera dont le suivant:

| Dioptre | λ |
|---|---|
| - Plexiglas-propane liquide | 60° |
| - Plexiglas-butane liquide | 65° |
| - Plexiglas-butane gazeux | 42° |
| - Butane liquide-butane gazeux | 47,7° |
| - Propane liquide-propane gazeux | 50,8° |

Comme montré sur la figure 2, si le dioptre "plexiglas-gaz liquide" constitué à la face 4 du corps transparent 2 est incliné à 45° par rapport à l'axe du faisceau de fibres optiques, l'angle d'incidence i (45°) est inférieur à l'angle limite λ pour l'interface "plexiglas-butane ou propane liquide" (respectivement 65° et 60°). Il n'y a donc pas réflexion totale, mais réfraction.

On notera que, si le ménisque de gaz liquide 1 n'existait pas, l'angle d'incidence i (45°) serait plus important que l'angle limite pour l'interface "plexiglas-butane" ou "plexiglas-propane gazeux" (≃ 42°) et il y aurait alors réflexion totale.

Les rayons rencontrent ensuite le second dioptre ("butane ou propane liquide - butane ou propane gazeux") sous une incidence i'. Il n'y aura pas non plus réflexion totale, car, suivant la position des rayons lumineux, compte tenu de la concavité de ce second dioptre, tous les rayons incidents i' seront inférieurs à 45° (cette dernière valeur étant atteinte, en théorie, au point de tangence du ménisque 1 avec la face 4) et seront donc dans tous les cas inférieurs à l'angle limite λ (dont la valeur pour l'interface "butane liquide-butane gazeux" est de 47,7° et pour l'interface "propane liquide-propane gazeux" est de 50,8°).

Il est ainsi clair que la présence du ménisque liquide 1 provoque une réfraction des rayons incidents 5, qui se traduira donc par une zone sombre sur la face d'observation constituée par l'extrémité du faisceau de fibres situées l'extérieur du briquet.

En conséquence, si le corps transparent et le faisceau de fibres optiques avec une extrémité duquel il est en contact optique sont logés dans un réservoir de gaz liquéfié, un utilisateur, en examinant la face d'observation du faisceau de fibres pourra constater que:

- tant que le corps transparent baignera dans la phase liquide, tous les rayons lumineux incidents amenés à celui-ci par le (faisceau de fibres optiques pénètreront dans le gaz liquéfié et aucun signal lumineux n'apparaîtra sur la face d'observation du faisceau de fibres, où l'on ne distinguera qu'une tache sombre;
- lorsque le dioptre ne baignera plus dans la phase liquide, mais qu'il subsistera encore du gaz sous phase liquide dans le réservoir, les rayons lumineux incidents seront réfléchis par la ou les faces du corps transparent en contact avec la phase gazeuse, mais non les rayons qui rencontreront le ou les ménisques de phase liquide formés dans les angles du corps transparent l'observateur notera donc l'apparition d'un signal lumineux d'une forme déterminée correspondant à celle du corps transparent, entourée d'une ou de zone (s) sombre (s), correspondant au (x) ménisque (s) liquide (s);
- lorsque le réservoir ne contiendra pratiquement plus de gaz liquéfié, mais essentiellement une phase gazeuse, les zones sombres entourant le signal lumineux disparaîtront et seront remplacées par des zones claires informant ainsi l'observateur qu'il est temps de remplir le réservoir.

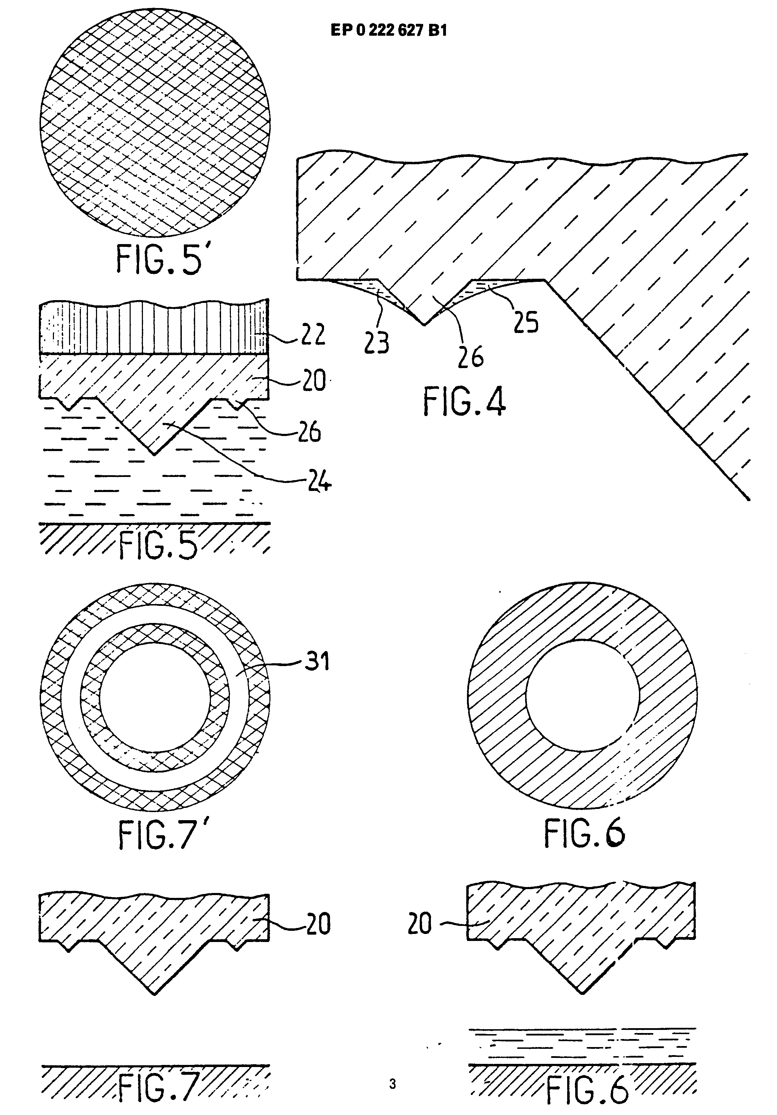

Sur les figures 3 à 7, le corps transparent 20 en contact avec un faisceau de fibres optiques 22 est constitué d'un cylindre de "Plexiglas", pourvu au centre de sa surface de base d'un premier élément dioptrique 24 de forme conique et d'angle au sommet 90°. Il comporte également un second élément dioptrique 26 annulaire de section triangulaire et d'angle au sommet 90°. Le diamètre du corps transparent 20 et la hauteur de l'élément dioptrique conique 24 sont fonction de la dimension du signal que l'on souhaite observer. La hauteur à donner au second élément dioptrique annulaire 26 dépendra de la nature du matériau transparent constituant le corps 20 et de celle du gaz utilisé. La Demanderesse a établi que, dans le cas du "Plexiglas" et du butane, une hauteur de 0,2 mm permet d'obtenir, comme représenté figure 4, deux ménisques 23 et 25 recouvrant totalement l'élément dioptrique 24.

Ainsi lorsque le corps transparent 20 sera complétement immergé dans le gaz liquide du réservoir (figure 5) la face d'observation sera complètement sombre (figure 5'); lorsqu'il restera un peu de gaz liquide (figure 6), la face d'observation présentera un rond lumineux central (figure 6') et, enfin, lorsqu'il ne restera plus de gaz liquide dans le réservoirs (figure 7) il y aura apparition d'un signal lumineux 31 correspondant à une réflexion totale des rayons lumineux sur l'élément dioptrique 26 (figure 7'). Ce signal indiquera à l'utilisateur que son briquet doit être rempli.

Les figures 8 et 9 montrent des corps transparents 29 pourvus d'éléments dioptriques de différentes formes.

Dans le cas de la figure 8, l'élément dioptrique 30 a la forme d'une croix, tandis que, sur la figure 9, il reproduit, à l'envers, les lettres du mot FIN, qui apparaîtra ainsi à l'observateur comme signal de l'imminence de fin de gaz.

L'invention apporte donc un moyen simple et facile à mettre en oeuvre pour déterminer l'imminence de l'épuisement en gaz d'un réservoir de gaz liquéfié, qui s'applique, en outre, particulièrement bien à un briquet à gaz liquéfié rechargeable, en vue de signaler à un utilisateur l'opportunité de recharger son réservoir en gaz liquéfié.

## Revendications

1. Dispositif de détection de l'imminence de l'épuisement en gaz d'un réservoir de gaz liquéfié, comprenant un faisceau de fibres optiques (22) dont une extrémité, constituant une face d'observation, est visible de l'extérieur du réservoir, et dont l'autre extrémité, disposée à l'intérieur du réservoir, est en contact optique avec une face plane d'un élément transparent (20) comportant, sur sa face opposée, au moins un premier élément dioptrique (26, 30, 32), dont les parois latérales forment un angle, de préférence obtus, avec la dite face et caractérisé (en ce que les dimensions de cet élément dioptrique sont telles qu'il soit apte, tant qu'il subsiste du gaz liquide dans le réservoir, à être recouvert, sensiblement dans sa totalité, par un ménisque formé d'un condensat de gaz liquide, lequel évite ainsi toute réflexion totale sur ladite face, des rayons acheminés par le faisceau de fibres.

2. Dispositif de détection suivant la revendication 1, caractérisé en ce que l'élément transparent (20) comporte au moins un second élément dioptrique (24) de dimensions suffisamment importantes pour que les dimensions du susdit ménisque soient négligeables par rapport à ses dimensions propres.

3. Dispositif suivant la revendication 1, caractérisé en ce que la section droite dudit premier élément dioptrique perpendiculaire au plan de la susdite face plane (20) est en forme de triangle isocèle d'angle au sommet 90°.

4. Dispositif de détection suivant la revendication 2, caractérisé en ce que le second élément dioptrique (24) est en forme de cône.

5. Dispositif de détection suivant la revendication 3, caractérisé en ce que le premier élément dioptrique a la forme d'une couronne (26).

6. Dispositif de détection suivant la revendication 3, caractérisé en ce que le premier élément dioptrique a la forme d'une croix (30).

7. Dispositif de détection suivant la revendication 3, caractérisé en ce que le premier élément dioptrique a la forme d'un ou plusieurs signes alpha-numériques (32).

8. Briquet à gaz rechargeable équipé d'un dispositif selon l'une des revendications précédentes.

## Patentansprüche

1. Nachweisvorrichtung für einen nahezu entleerten Flüssigkeitsbehälter mit einem Bündel optischer Fasern (22), dessen eines, eine Sichtfläche ausbildendes Ende von außerhalb des Behälters sichtbar ist und dessen anderes, im Inneren des Behälters angeordnetes Ende in optischem Kontakt mit einer ebenen Fläche eines transparenten Elementes (20) steht, welches auf seiner gegenüberliegenden Fläche wenigstens ein erstes lichtbrechendes Element (26, 30 ,32) aufweist, dessen Seitenwände einen, insbesondere stumpfen Winkel mit dieser Fläche einschließen, dadurch gekennzeichnet, daß die Abmessungen des lichtbrechenden Elementes derart sind, daß es, solange sich Flüssiggas im Behälter befindet, im wesentlichen vollkommen durch einen von einem Kondensat des Flüssiggases gebildeten Meniskus bedeckt ist, welcher derart jegliche Totalreflexion der durch das Faserbündel geleiteten Strahlen an der Fläche verhindert.

2. Nachweisvorrichtung nach Anspruch 1, dadurch gekennzeichnet, daß das transparente Element (20) wenigstens ein zweites lichtbrechendes Element (24) mit ausreichend großen Abmessungen aufweist, so daß die Abmessungen des Meniskus relativ zu den genannten Abmessungen vernachlässigbar sind.

3. Vorrichtung nach Anspruch 1, dadurch gekennzeichnet, daß der Querschnitt des ersten lichtbrechenden Elementes normal auf die Ebene der ebenen Fläche (20) in Form eines gleichschenkeligen Dreiecks mit einem Scheitelwinkel von 90° ausgebildet ist.

4. Nachweisvorrichtung nach Anspruch 2, dadurch gekennzeichnet, daß das zweite lichtbrechende Element (24) in Form eines Kegels ausgebildet ist.

5. Nachweisvorrichtung nach Anspruch 3, dadurch gekennzeichnet, daß das erste lichtbrechende Element die Form eines Kranzes (26) aufweist.

6. Nachweisvorrichtung nach Anspruch 3, dadurch gekennzeichnet, daß das erste lichtbrechende Element die Form eines Kreuzes (30) aufweist.

7. Nachweisvorrichtung nach Anspruch 3, dadurch gekennzeichnet, daß das erste lichtbrechende Element die Form eines oder mehrerer alpha-numerischer Zeichen (32) aufweist.

8. Wiederaufladbares Gasfeuerzeug, welches mit einer Vorrichtung gemäß einem der vorangehenden Ansprüche ausgestattet ist.

**Claims**

1. A device for detecting the imminent exhaustion of gas in a liquefied gas reservoir comprising a bundle of optical fibres (22) of which one end which forms a viewing face is visible from the outside of the reservoir and the other end which is disposed within the reservoir is in optical contact with a flat face of a transparent element (20) which on its opposite face comprises at least a first dioptric element (26, 30, 32), the side walls of which form a preferably obtuse angle with said face and characterised in that the dimensions of said dioptric element are such that, as long as there is liquid gas in the reservoir, the element is capable of being covered substantially in its entirety by a meniscus formed by a liquid gas condensate which thus prevents any total reflection at said face of the rays carried by the bundle of fibres.

2. A detection device according to claim 1 characterised in that the transparent element (20) comprises at least a second dioptric element (24) of sufficiently large dimensions for the dimensions of said meniscus to be negligible with respect to its own dimensions.

3. A device according to claim 1 characterised in that the cross-section of said first dioptric element perpendicular to the plane of said flat face (20) is in the form of an isosceles triangle with an apex angle of 90°.

4. A detection device according to claim 2 characterised in that the second dioptric element (24) is in the form of a cone.

5. A detection device according to claim 3 characterised in that the first dioptric element is in the form of a ring (26).

6. A detection device according to claim 3 characterised in that the first dioptric element is in the form of a cross (30).

7. A detection device according to claim 3 characterised in that the first dioptric element is in the form of one or more alpha-numeric signs (32).

8. A rechargeable gas lighter provided with a device according to one of the preceding claims.

FIG.1

FIG.9

FIG.3

FIG.2

FIG.8

FIG.5'

FIG.4

22

20

26

24

23

26

25

FIG.5

31

FIG.7'

FIG.6

20

20

FIG.7

FIG.6

3